# EUROPEAN PATENT APPLICATION

(11) **EP 0 852 292 A1**
(43) Date of publication of application: **08.07.1998**
(21) Application number: 97203981.2
(22) Date of filing: 17.12.1997
(51) Int. Cl.: F02M 31/125

(54) **Arrangement for heating diesel fuel or a similar electrically nonconductive fluid**

(30) Priority: 06.01.1997 NL 1004936
(71) Applicant: Texas Instruments Holland B.V., 7600 AA Almelo (NL)
(72) Inventor: Boersma, Michiel, 7621 EG Borne (NL); Grutterink, Edward, 7611 BS Aadorp (NL); Berkel, Bennie, 7641 XH Wierden (NL)
(74) Representative: de Bruijn, Leendert C.

(57) **Abstract**

For the purpose of heating diesel fuel (or possibly another electrically nonconductive fluid) use is made of an arrangement which comprises a heating chamber (2), a feeder (3) of fuel to the heating chamber (2), a discharge (4) of fuel from the heating chamber (2), at least one tablet (7) of PTC material, to bring the diesel fuel flowing through the heating chamber to the desired temperature, and contacts (9, 10) to pass an electric current through the said tablet. The PTC tablet is supported in such a way within the heating chamber (2), that the major portion of the tablet, without the interposition of a heat sink, is able to come into contact directly with the fuel stream. The flow ducts between the largest surfaces of the tablet (7) and the wall of the heating chamber (2) have a height of at least 0.1 mm.

## Description

The invention relates to an arrangement for heating diesel fuel or a similar electrically nonconductive fluid, comprising: a heating chamber, a feeder of fuel to the heating chamber, a discharge of fuel from the heating chamber, at least one tablet of PTC material, to bring the fluid flowing through the heating chamber to the desired temperature, and contacts to pass an electric current through the said tablet.

Diesel fuel contains paraffin waxes which can flocculate at low temperatures. The flocculate may clog the fuel filter of a diesel engine, resulting in possible problems during starting and driving. These problems can be avoided if the fuel is heated with the aid of an abovementioned arrangement. Between the PTC tablet and the fuel stream, known heating arrangements have a so-called heat sink, i.e. a metal body which transfers the heat generated by the PTC tablet to the fuel. The power output and the efficiency of such a heating arrangement are comparatively low.

It is an object of the invention to avoid this drawback.

To this end, the arrangement mentioned in the preamble is characterized in that the PTC tablet is supported in such a way within the heating chamber, that the major portion of the PTC tablet - without the interposition of a heat sink - is able to come into contact directly with the fuel stream, the flow ducts between the largest surfaces of the tablets and the wall of the heating chamber having a height of at least 0.1 mm.

Preferably, the height of the said flow ducts is between 0.3 and 0.8 mm.

It should be noted that the so-called retrograde effect does not come into play in the arrangement according to the invention.

The advantage of the said design is a high efficiency resulting in the absence of a high peak current. Consequently a low fuse rating can be used. An additional advantage is the simplicity of the design.

Any pressure drop over the heating arrangement can be avoided by tranquillization chambers being disposed between the said feeder and the said discharge on the one hand and the heating chamber on the other hand, the purpose being to achieve laminar flow.

An advantageous, expedient support of a PTC tablet within the heating chamber consists, for example, in the rims of the pellet being retained in the housing. A narrow rim is to be preferred in the context of the largest possible effective heating surface area. An electrical contacting system is also fitted, to supply the pellet with energy. Preferably this is a resilient contact system, to compensate for temperature variations and dimensional scatter.

The invention will be explained in more detail with reference to the figures.

Figure 1 shows a longitudinal section through an embodiment of the arrangement according to the invention.

Figure 2 shows a section on II-II in Figure 1.

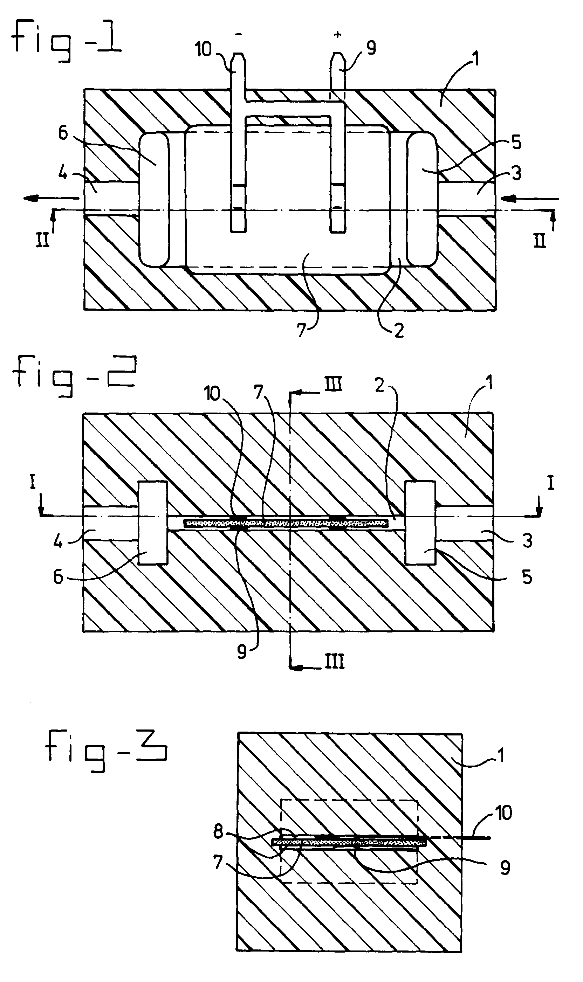

Figure 2 shows a section on III-III in Figure 2.

The arrangement as depicted comprises a housing 1, hollowed out within which are the heating chamber 2, a feeder duct 3 for diesel fuel to be heated, a discharge duct 4 for heated diesel fuel and two tranquillization chambers 5 and 6.

Within the heating chamber 2 a tablet 7 of PTC material is disposed. PTC stands for "positive temperature coefficient". A typical feature of this ceramic material is that the resistance increases with temperature, the temperature being unable to rise above a specific value for a particular material.

The periphery of the housing securely holds the pellet in such a position that a gap remains open between the tablet and the wall of the chamber 2. In the case of the intended application, the distance between the tablet surface and the chamber wall has a value of at least 0.1 mm, preferably between 0.3 and 0.8 mm. Certain applications may require a gap size of greater than 1 mm.

By means of positive and negative contact pins 9 and 10, respectively, electric current can be passed through the tablet 7, as a result of which the tablet reaches a higher temperature.

The arrangement as depicted is fitted in the fuel supply system of a diesel engine of a car, specifically on the suction side of the diesel pump, upstream of the fuel filter. The current supply is switched on, for example by a thermostat, at a temperature of about 0° and is switched off at a temperature of about 20°C.

It will be evident that the fuel supplied via the feeder duct 3 comes to rest in the chamber 5 and flows along the top face and bottom face of the PTC tablet 7 and is heated directly by that tablet. Via the chamber 6 and the discharge duct 4 the heated fluid flows towards a filter (not shown) and thence to a diesel pump (not shown) which pressurizes the fuel. The said construction can be positioned in the fuel supply, but may also be integrated within the head of the fuel filter. The last mentioned position means integration of functions within the system.

Instead of the tablet 7 as shown it is also possible for more tablets to be employed.

Within the spaces between the large tablet surfaces and the wall of the heating chamber 2, corrugated strips may, for example, be located which serve as flow guides and at the same time as a contact system.

In the case of a heating arrangement according to the prior art including a heat sink, rated at 130 watts, a voltage of 13 volts will produce a current of 10 amperes. The starting current in that case may be about 20 amperes. This will have to be taken into account in deciding the fuse.

In the case of the heating arrangement according to the invention without a heat sink, rated at 130 watts, the starting current will be lower. This therefore means that a smaller fuse can be employed.

With customary heating arrangements a larger heat sink is used for a higher rating. The invention is based on the concept that it is precisely in the absence of a heat sink that a higher wattage can be generated.

At least a considerable fraction of the fuel comes directly into contact with the PTC tablet. The temperature increase of the fuel depends on the wattage generated in the tablet and the volume flow. By virtue of the said invention a construction can be designed which, for a given volume flow, removes as much energy as possible from the tablet. The heating arrangement is thus optimized to provide a certain volume flow with an amount of energy which leads to a specific desired temperature increase.

The heating arrangement set forth is simple and inexpensive and results in a large output.

Within the scope of the claims, further modifications are still possible.

## Claims

1. Arrangement for heating diesel fuel or a similar electrically nonconductive fluid, comprising: a heating chamber (2), a feeder (3) of fuel to the heating chamber (2), a discharge (4) of fuel from the heating chamber (2), at least one tablet (7) of PTC material, to bring the diesel fuel flowing through the heating chamber to the desired temperature, and contacts (9, 10) to pass an electric current through the said tablet, characterized in that the PTC tablet (7) is supported in such a way within the heating chamber (2), that the major portion of the tablet - without the interposition of a heat sink - is able to come into contact directly with the fuel stream, the flow ducts between the largest surfaces of the tablet (7) and the wall of the heating chamber (2) having a height of at least 0.1 mm.

2. Arrangement according to Claim 1, characterized in that the height of the said flow ducts is between 0.3 and 0.8 mm.

3. Arrangement according to Claim 1 or 2, characterized in that between the said feeder (3) and discharge (4) on the one hand, and the heating chamber (2) on the other hand there are tranquillization chambers (5, 6).

4. Arrangement according to any one of the preceding claims, characterized in that the tablet (17) is supported within the heating chamber (2) by virtue of the rim of the tablet being retained.

5. Arrangement according to any one of the preceding claims, characterized in that the electrical contacts (9, 10) are designed to be resilient.

6. Arrangement according to any one of the preceding claims, characterized in that the heating arrangement is integrated into the fuel filter system of a diesel engine, for example in the filter head.
